# EUROPEAN PATENT APPLICATION

(11) **EP 1 744 532 A2**
(43) Date of publication of application: **17.01.2007**
(21) Application number: 05026061.1
(22) Date of filing: 30.11.2005
(51) Int. Cl.: H04N 1/00

(54) **Multi-image-source document camera**

(30) Priority: 13.07.2005 CN 200510083372
(71) Applicant: Avermedia Technologies, Inc., Chung Ho City, Taipei Hsien 23545 (TW)
(72) Inventor: Wu, Jiun-Shin, Chung Ho City Taipei Hsien 23585 (TW); Chen, Jung-Yu, Chung Ho City Taipei Hsien 23585 (TW); Wu, Yung-Hsi, Chung Ho City Taipei Hsien 23585 (TW); Hung, Po-Chih, Chung Ho City Taipei Hsien 23585 (TW)
(74) Representative: Winkler, Andreas Fritz Ernst

(57) **Abstract**

A document camera (100) is used to show image picked up from an object (2) and/or image received from an external apparatus such as a computer (3) on an image display (51). In the document camera (100), an image sensing and processing device (41) senses image of an object (2) and processing the image into an image signal (S2). A display controller (42) controls the display of the image signal. An image synthesizer (43) combines a first image signal (S1) received from an external apparatus (3) with a second image signal (S2) received from the image sensing and processing device (41) and has images represented by the first image signal (S1) and the second image signal (S2) simultaneously displayed under the control of the display controller (42).

## Description

The present invention relates to a document camera, and more particularly to a document camera capable of processing multi-sourced images.

Multimedia processing technology is very widely applied to electronic products in the market, such as PDAs (Personal Digital Assistants), cellular phones, document cameras, high-definition digital TVs and document cameras. For implementing the multimedia processing technology, DSP (Digital Signal Processor) is commonly used in these electronic products.

The DSP is advantageous of processing a large number of input digital signals at one time, and quickly executing operations to reach the Real-Time performance. The special DSP hardware and command designs facilitate the accomplishment of complicated control and various additional functions required by respective electronic products. Unlike the traditional microprocessor, the DSP has improved command execution speed, performance and Real-Time performance, so the DSP plays an important role on multimedia processing technology.

Taking a document camera as an example, it is popularly used in a regular meeting or an academic conference to show some literal or graphical data in order to facilitate the presentation or discussion of a document, chart or academic thesis. Compared with the traditional transparency projectors, the document cameras not only exhibit better image quality and versatile functions but also easier in preparing material to be shown. For example, the documents or charts do not have to be printed on the transparent projection slices as they used to do with the traditional transparency projector. Furthermore, a document camera is generally more compact is size than a traditional transparency projector and thus is inconvenient for carrying and storing.

A document camera is typically incorporated therein the architecture of a scanner or a video camera for performing digital image scanning, image capturing, and image outputting functions. So, a document camera may be equipped with a video-capturing module generally used in a digital still camera, digital video camera or cellular phone to execute the image pickup function. An image sensor, which is implemented with a complementary metal-oxide-semiconductor sensor (CMOS sensor) or a Charge Couple Device (CCD), is used in the video-capturing module to pick up the image of an object positioned in front of the video-capturing module, and an image display is used with the document camera for showing the image of the object captured by the image sensor. For example, the image display can be a monitor of a TV set, a display of a computer system or a projection screen showing images via the protection of a digital projector. In this way, the document or chart can be displayed in a live video manner. Also, the utilization of a document camera vivifies the presentation due to its functional varieties. Therefore, a document camera is expected to replace the traditional transparency projector in near future.

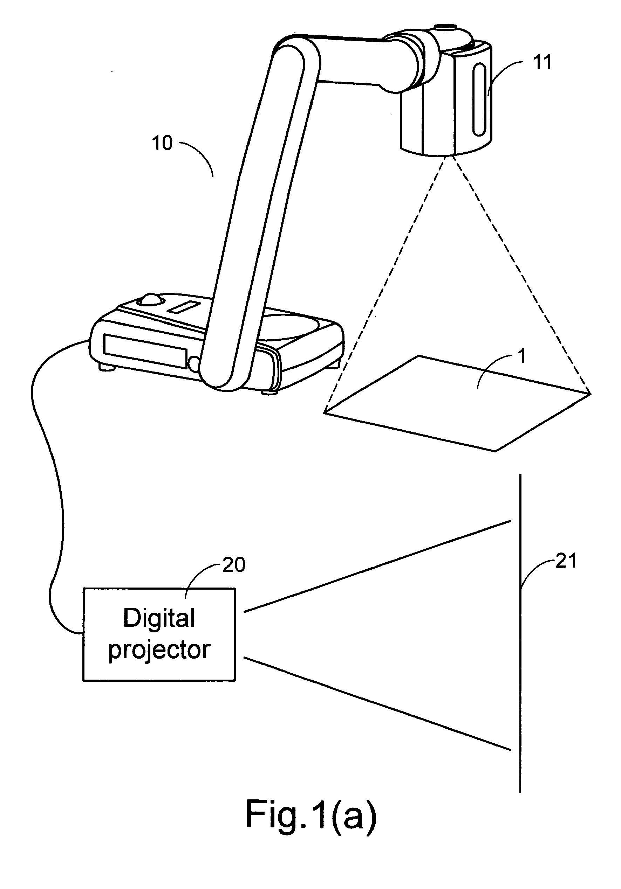

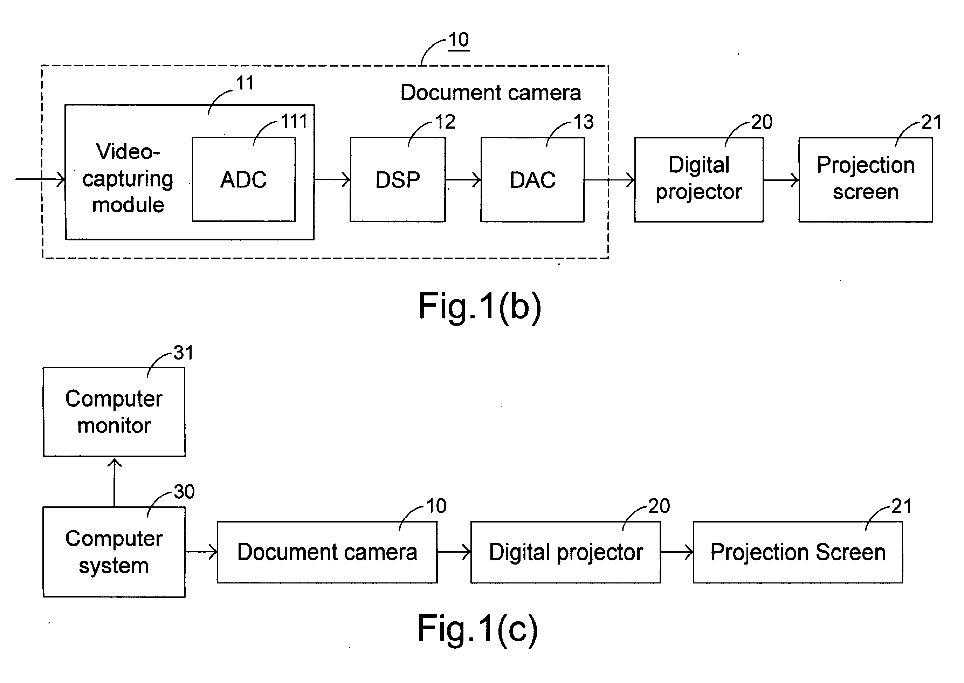

Please refer to the example shown in Figure 1(a). A document camera 10 is coupled to a digital projector 20 and a projection screen 21 is arranged a proper distance from the digital projector 20. The image of the object 1 captured by a video-capturing module 11 is processed by the document camera 10 and then outputted to the digital projector 20 to be shown on the projection screen 21. By placing the object in of the focusable range of the video-capturing module 11, the document camera 10 will be able to process the image of object 1 and show it as a live video on the projection screen 21 via the digital projector 20. In addition to showing images via the digital projector 20 and the projection screen 21, the images captured by the document camera 10 can also be shown on an image display directly coupled to the document camera 10, such as a monitor of a TV set or a display of a computer system. For most document cameras, there is a focus adjusting device (not shown) arranged in the video-capturing module 11 for manually zooming in or zooming out the object 1 to focus on a specific area that the user is interested in.

Please refer to Figure 1 (b). It shows a functional block diagram of the document camera 10. Conventionally, the document camera 10 includes a video-capturing module 11, a digital signal processor (DSP) 12 and a digital-to-analog converter (DAC) 13. The video-capturing module 11 includes an analog-to-digital converter (ADC) 111. The received light intensity from an object is converted into corresponding amount of charges through photoelectrical conversion and then outputted as an analog signal. The analog signal is then converted into a digital image data by the ADC 111 and transmitted to the DSP 12 for further processing, e.g. zoom in/out or scale up/down operations of the digital image data. Afterwards, the DAC 13 converts the processed digital image data into an analog image data and outputs it to the projection screen 21 via the digital projector 20 for display

In addition to the image obtained by scanning the object positioned in front of the video-capturing module, the document camera can have the image obtained from other image sources shown on the image display. For example, the image source can be a computer system. In other words, the image frames generated by the computer system 30, e.g. document contents or file-browsing pages, can be shown not only on its own display 31 but also onto the projection screen 21 via the document camera 10 and the digital projector 20, as shown in Fig. 1(c). The image frames outputted from the computer system 30 to the document camera are preferably of a Video Graphics Array (VGA) signal format. Furthermore, the images outputted by the document camera 10 to be shown on the display 21 originate from two different sources. Conventionally, the images from the two image sources cannot be shown simultaneously. Instead, they can only be selectively outputted via a switching device (not shown) of the document camera 10.

Sometimes, however, we may need to compare the two different-sourced image frames or analyze one of the image frames with reference to the other. According to the prior art, we would have to switch the image frames frequently to achieve the purpose. It is apparently inconvenient in operation and realization.

Therefore, the present invention provides a document camera allowing two different-sourced images to be shown on the same screen at the same time for comparison, analysis or any other purpose.

The present invention provides a document camera capable of processing multi-sourced images. The document camera comprises an image sensing and processing device for sensing image of an object and processing the image into an image signal; a display controller for controlling the display of the image signal; and an image synthesizer for combining a first image signal received from an external apparatus with a second image signal received from the image sensing and processing device and having images represented by the first image signal and the second image signal simultaneously displayed under the control of the display controller.

In an embodiment, the display controller receives the first image signal via a bypass from the external apparatus and receives the second image signal via a bypass from the image sensing and processing device for controlling the output of the first image signal and the second image signal respectively from the external apparatus and the image sensing and processing device to the image synthesizer. Preferably, the display controller also adjusts the phase difference between the first image signal and the second image signal.

In an embodiment, the image sensing and processing device comprises an image sensor for picking up image of an object and generating an analog image signal accordingly; a first analog-to-digital converter for converting an analog image signal into a digital image signal; and a processor for executing a specific operation of a digital image signal, thereby generating the second image signal as a digital image signal.

For example, the specific operation is a scale up/down operation. The specific operation may also be or further do a format-adjusting operation for adjusting the format of the second image signal to allow the second image signal to be synthesized with the first image signal.

When the output signal from the external apparatus is an analog signal, the document camera further comprises a second analog-to-digital converter communicable with the external apparatus for converting an analog image signal received from the external apparatus to a digital image signal serving as the first image signal.

Depending on the image display where the synthesized image is to be shown, the document camera may further comprise a digital-to-analog converter coupled to the image synthesizer for converting a synthesized digital image signal to a synthesized analog image signal. The digital-to-analog converter is preferably communicable with a digital projector for projecting the synthesized analog image signal onto a projection screen or a display for showing the synthesized analog image signal.

In an embodiment, the document camera is communicable with a computer system serving as the external apparatus for receiving a digital image signal serving as the first image signal from the computer system.

In an embodiment, the image synthesizer includes a frame buffer for storing pixel values of the synthesized image constituted by the first image signal and the second image signal under the control of the display controller. The first image signal and the second image signal are superimposed on each other by the image synthesizer to show a specified pattern according to the pixel values stored in the frame buffer.

For example, the specified pattern is that two parallel frames represented by the first image signal and the second image signal, respectively, are simultaneously shown.

Alternatively, the specified pattern is that a main frame and a sub-frame represented by the first and second image signals are simultaneously shown.

The present invention also provides a document camera system, which comprises a computer optionally generating a first image signal; an image sensing and processing device optionally sensing image of an object and processing the image into a second image signal; an image synthesizer for synthesizing the first image signal with the second image signal in a specified pattern; an image display selectively showing the first image signal, the second image signal or the synthesized image signal in the specified pattern; and a display controller controlling the displaying of the synthesized image signal in the specified pattern by adjusting the operational clocks of the first image signal and the second image signal.

The present invention further provides a document camera system, which comprises a computer optionally generating a first image signal; an image sensing and processing device optionally sensing image of an object and processing the image into a second image signal; an image synthesizer for synthesizing the first image signal with the second image signal in a specified pattern; an image display selectively showing the first image signal, the second image signal or the synthesized image signal in the specified pattern; and a display controller controlling the displaying of the synthesized image signal in the specified pattern by adjusting the phase difference between the first image signal and the second image signal.

The above contents of the present invention will become more readily apparent to those ordinarily skilled in the art after reviewing the following detailed description and accompanying drawings, in which:
Figure 1(a) is a schematic diagram illustrating a typical document camera for use with a digital projector and an image display;
Figure 1(b) is a functional block diagram illustrating a conventional document camera;
Figure 1(c) is a functional block diagram illustrating a conventional document camera system wherein a document camera can show image either received from a computer or picked up from an object;
Figure 2 is a functional block diagram of a document camera system according to a first embodiment of the present invention;
Figures 3(a), 3(b) and 3(c) are schematic diagrams illustrating a projection screen on which three exemplified patterns of synthesized image are shown; and
Figure 4 is a functional block diagram of a document camera system according to a second embodiment of the present invention.

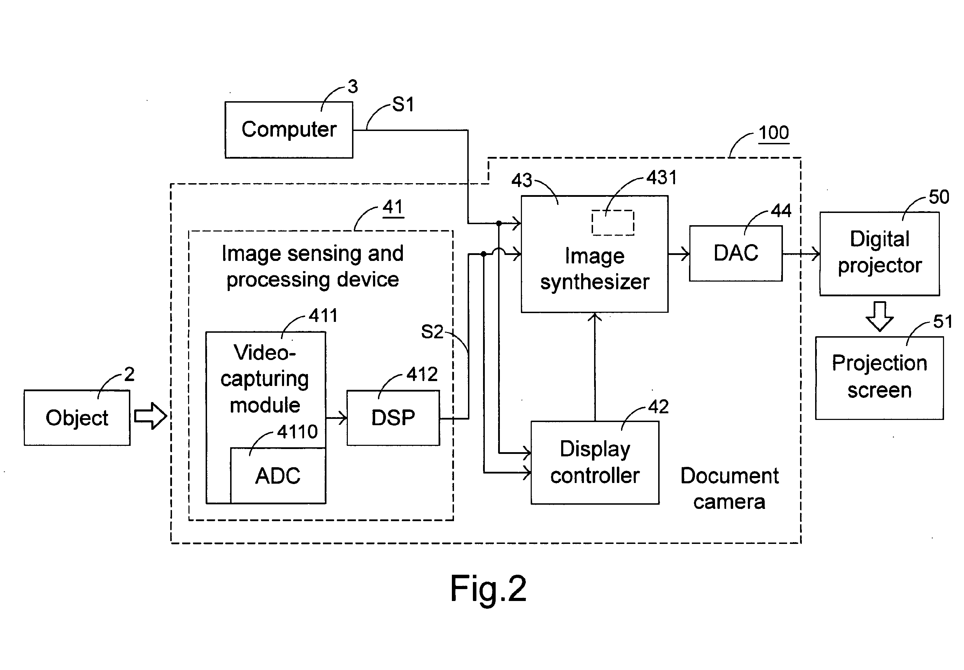

For imparting the image-synthesizing function to a document camera, a display controller and an image synthesizer are arranged in the document camera to integrate the different-sourced images according to the present invention. Please refer to Figure 2 which illustrates a first embodiment of the document camera capable of synthesizing different-sourced images according to the present invention. The document camera 100 is used to show an image signal S2 of an object 2 on a projection screen 51 via a digital projector 50. Alternatively, the document camera 100 can be coupled to an external apparatus, e.g. a computer 3, for having another image signal S 1 received from the external apparatus shown on the projection screen 51 via the digital projector 50. Preferably, the image signal S1 has a format compatible with the display format without further conversion.

On the other hand, the image signal S2 is obtained by picking up the image of the object 2 and converted/processed by some elements of the document camera 100. The document camera 100 includes an image sensing and processing device 41, a display controller 42 and an image synthesizer 43. The image sensing and processing device 41 includes a video-capturing module 411 that is an image sensor integrated therewith an analog-to-digital converter (ADC) 4110, and an image processor 412. For example, the image sensor is a Charge Couple Device (CCD) or a complementary metal-oxide-semiconductor sensor (CMOS sensor). The received light intensity from an object is converted into corresponding amount of charges through photoelectrical conversion and then outputted as an analog signal. The analog signal is then converted into a digital image data by the ADC 4110 and transmitted to the image processor 412, e.g. digital signal processor (DSP), for further processing. Through the image processor 412, the format of the image signal S2 can be made consistent with that of the image signal S1, and some advanced operations can be performed, for example scaling up or down the image data.

When it is necessary to show the image from the computer system 3 and the image of the object 2 on the same screen at the same time, the image signal S1 and the image signal S2 are transmitted to the image synthesizer 43 to be synthesized under the control of the display controller 42.

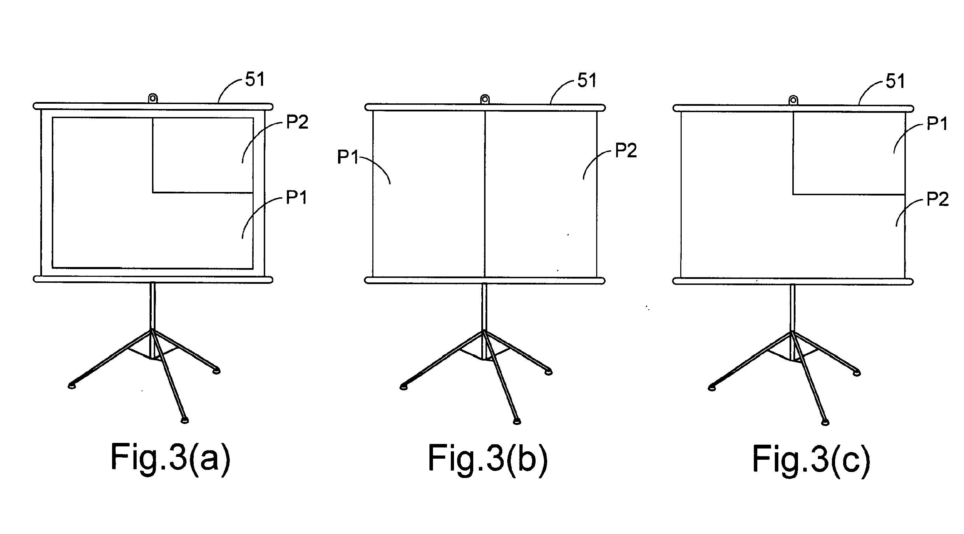

In the embodiment of Fig. 2, the image signal S 1 is a digital image signal, and the image signal S2 is also a digital image signal when being outputted from the DSP 412. As different-sourced signals may rely on different operational clocks and thus exhibit phase difference therebetween, they should be properly adjusted before combination to prevent from errors. Both of the image signals S 1 and S2 are inputted to the image synthesizer 43 and the display controller 42 in parallel. The display controller 42 adjusts the operational clocks to control the output timing of the image signals S 1 and S2 and eliminate the phase difference between the image signals S 1 and S2. Meanwhile, the pixel values of the image signals S 1 and S2 referred to constitute the synthesized image are stored in a frame buffer 431 of the image synthesizer 43 by the display controller 42. The presence of the frame buffer 431 allows different-sourced image signals to be buffered so as to be synchronized. It is particularly advantageous for implementing the present synthesizing operation in a real-time image-displaying case. The pixel values include position information as well as color values of each pixel so that the synthesized image can be smoothly shown according to these pixel values. The image synthesizer 43 then digitally combines the image signals S 1 and S2 in the same format and the same phase according to the pixel values stored in the frame buffer 431, and has the synthesized image shown in a specified pattern. Before being outputted to the image display, e.g. a digital projector 50 and a projection screen 51, the synthesized digital image signal is optionally processed with a digital-to-analog converter 44. The specified combination pattern of the image signals S 1 and S2 is preferably able to be manipulated by the user. For example, the image signals S1 and S2 can be synthesized to show parallel image frames P1 and P2, as shown in Fig. 3(b). Alternatively, the image frames P1 and P2 represented by the image signals S1 and S2, respectively, can be shown as a main frame and a sub-frame, and vice versa, as shown in Figs. 3(a) and 3(c). Of course, for being shown in desired sizes, the image signals S 1 and S2 are properly scaled up or scaled down by the DSP 412.

The document camera system according to the present invention allows different-sourced images to be shown on the same screen at the same time in any way of Figs. 3(a), 3(b), 3(c) or similar. Optionally, it is possible to show only the image from the computer or the image picked up from an object according to the present document camera system. For example, by scaling up the image signal S2 with the DSP 412 and controlling the displayed pattern with the display controller 42, the size ratio of the image frame P2 to the image frame P1 can be enlarged significantly or the frame P 1 can even be omitted. On the contrary, by largely scaling down the image signal S2 with the DSP 412 and controlling the displayed pattern with the display controller 42, the size ratio of the image frame P1 to the image frame P2 can be enlarged significantly or the frame P2 can even be omitted. Alternatively, it is feasible to use other hardware or software means to achieve the purpose of switching the displaying of the image from either source or the synthesized image.

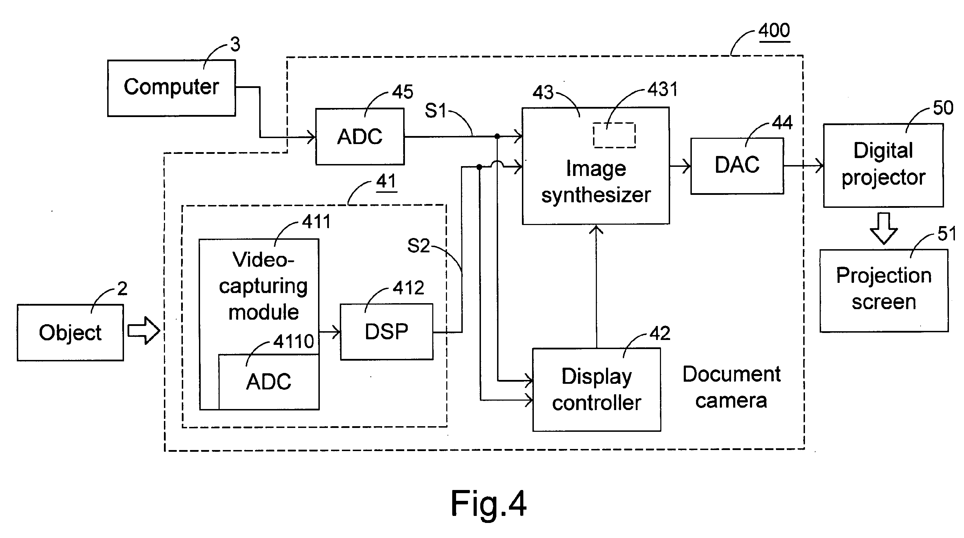

In another embodiment that the external apparatus, e.g. the computer 3, outputs an analog image signal to the document camera 400 to be independently shown or synthesized with the image signal pickup from an object, an additional analog-to-digital converter 45 is arranged according to the present invention to convert the analog image signal to the digital image signal S1, as shown in Fig. 4.

In the above embodiments, the application of the present invention to two-image-source system is described. Nevertheless, more than two sourced images can be synthesized and displayed by applying the principle of the present invention as long as the configuration of the document camera supports multiple image-inputs. The image display is exemplified to be a projection screen showing images via the projection of a digital projector. Alternatively, it can be a monitor of a TV set or a computer system.

It is understood from the above descriptions that different-sourced images can be independently shown or simultaneously shown on the same image display in desired patterns according to the present invention. Therefore, it is convenient to compare different-sourced image frames and do further analysis without switching the image frames frequently.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

The features disclosed in the foregoing description, in the claims and/or in the accompanying drawings may, both separately and in any combination thereof, be material for realizing the invention in diverse forms thereof.

## Claims

1. A document camera (100) capable of processing multi-sourced images,
**characterized in that** the document camera (100) comprises:
an image sensing and processing device (41) for sensing image of an object (2) and processing the image into an image signal;
a display controller (42) for controlling the display of the image signal (S2); and
an image synthesizer (43) for combining a first image signal (S1) received from an external apparatus (3) with a second image signal (S2) received from the image sensing and processing device (41) and having images represented by the first image signal (S1) and the second image signal (S2) simultaneously displayed under the control of the display controller (42).

2. The document camera (100) according to claim 1, **characterized in that** the display controller (42) receives the first image signal (S1) via a bypass from the external apparatus (3) and receives the second image signal (S2) via a bypass from the image sensing and processing device (41) for controlling the output of the first image signal (S1) and the second image signal (S2) respectively from the external apparatus (3) and the image sensing and processing device (41) to the image synthesizer (43).

3. The document camera (100) according to claim 1, **characterized in that** the display controller (42) receives the first image signal (S1) via a bypass from the external apparatus (3) and receives the second image signal (S2) via a bypass from the image sensing and processing device (41) for adjusting the phase difference between the first image signal (S1) and the second image signal (S2).

4. The document camera (100) according to claim 1, **characterized in that** the image sensing and processing device (41) comprises:
an image sensor (411) for picking up image of an object and generating an analog image signal accordingly;
a first analog-to-digital converter (4110) for converting an analog image signal into a digital image signal; and
a processor (412) for executing a specific operation of a digital image signal, thereby generating the second image signal (S2) as a digital image signal.

5. The document camera (100) according to claim 4, **characterized in that** the specific operation is a scale up/down operation.

6. The document camera (100) according to claim 4, **characterized in that** the specific operation is a format-adjusting operation for adjusting the format of the second image signal (S2) to allow the second image signal (S2) to be synthesized with the first image signal (S1).

7. The document camera (400) according to claim 4, **characterized in that** the document camera (400) further comprises a second analog-to-digital converter (45) communicable with the external apparatus (3) for converting an analog image signal received from the external apparatus (3) to a digital image signal serving as the first image signal (S1).

8. The document camera (100) according to claim 1, **characterized in that** the document camera (100) further comprises a digital-to-analog converter (44) coupled to the image synthesizer (43) for converting a synthesized digital image signal to a synthesized analog image signal, and communicable with a digital projector (50) for projecting the synthesized analog image signal onto a projection screen (51) or a display for showing the synthesized analog image signal.

9. The document camera (100) according to claim 1, **characterized in that** the document camera (100) is communicable with a computer system (3) serving as the external apparatus for receiving a digital image signal serving as the first image signal (S1) from the computer system (3).

10. The document camera (100) according to claim 1, **characterized in that** the image synthesizer (43) includes a frame buffer (431) for storing pixel values of the synthesized image constituted by the first image signal (S1) and the second image signal (S2) under the control of the display controller (42).

11. The document camera (100) according to claim 10, **characterized in that** the first image signal (S1) and the second image signal (S2) are superimposed on each other by the image synthesizer (43) to show a specified pattern according to the pixel values stored in the frame buffer (431).

12. The document camera (100) according to claim 11, **characterized in that** the specified pattern is that two parallel frames (P1, P2) represented by the first image signal (S1) and the second image signal (S2), respectively, are simultaneously shown.

13. The document camera (100) according to claim 11, **characterized in that** the specified pattern is that a main frame (P1, P2) and a sub-frame (P2, P1) represented by the first and second image signals (S1, S2) are simultaneously shown.

14. A document camera system, **characterized in that** the document camera system comprises:
a computer (3) optionally generating a first image signal (S1);
an image sensing and processing device (41) optionally sensing image of an object (2) and processing the image into a second image signal (S2);
an image synthesizer (43) for synthesizing the first image signal (S1) with the second image signal (S2) in a specified pattern;
an image display (51) selectively showing the first image signal (S1), the second image signal (S2) or the synthesized image signal in the specified pattern; and
a display controller (42) controlling the displaying of the synthesized image signal in the specified pattern by adjusting the operational clocks of the first image signal (S1) and the second image signal (S2).

15. The document camera system according to claim 14, **characterized in that** the image sensing and processing device (41) comprises:
an image sensor (411) for picking up image of an object and generating an analog image signal accordingly;
a first analog-to-digital converter (4110) for converting an analog image signal into a digital image signal; and
a processor (412) for executing a specific operation of a digital image signal, thereby generating the second image signal (S2) as a digital image signal.

16. The document camera system according to claim 15, **characterized in that** the specific operation is a scale up/down operation.

17. The document camera system according to claim 15, **characterized in that** the specific operation is a format-adjusting operation for adjusting the format of the second image signal (S2) to allow the second image signal (S2) to be synthesized with the first image signal (S1).

18. The document camera system according to claim 14, **characterized in that** the document camera system further comprises a second analog-to-digital converter (45) coupled downstream of the computer (3) and upstream of the image synthesizer (43) and the display controller (42) for converting an analog signal generated by the computer (3) to a digital image signal serving as the first image signal (S1).

19. The document camera system according to claim 14, **characterized in that** the document camera system further comprises a digital-to-analog converter (44) coupled between the image synthesizer (43) and the image display (51) for converting a synthesized digital image signal to a synthesized analog image signal.

20. The document camera system according to claim 14, **characterized in that** the specified pattern is that two parallel frames (P1, P2) represented by the first image signal (S1) and the second image signal (S2), respectively, or a main frame (P1, P2) and a sub-frame (P2, P1) represented by the first and second image signals (S1, S2) are simultaneously shown.

21. A document camera system, **characterized in that** the document camera system comprises:
a computer (3) optionally generating a first image signal (S1);
an image sensing and processing device (41) optionally sensing image of an object (2) and performing a scaling operation of the image to obtain a second image signal (S2);
an image synthesizer (43) for synthesizing the first image signal (S1) with the second image signal (S2) in a specified pattern;
an image display (51) selectively showing the first image signal (S1), the second image signal (S2) or the synthesized image signal in the specified pattern; and
a display controller (42) controlling the displaying of the synthesized image signal in the specified pattern by adjusting the phase difference between the first image signal (S1) and the second image signal (S2).
